Europäisches Patentamt

European Patent Office

Office européen des brevets

(11) Veröffentlichungsnummer : **0 293 583 B1**

(12) **EUROPÄISCHE PATENTSCHRIFT**

(45) Veröffentlichungstag der Patentschrift :
06.03.91 Patentblatt 91/10

(51) Int. Cl.⁵ : **B21B 31/18**

(21) Anmeldenummer : 88106098.2

(22) Anmeldetag : 16.04.88

(54) **Vorrichtung zum axialen Verschieben von Walzen in Walzgerüsten.**

(30) Priorität : 20.05.87 DE 3716901

(43) Veröffentlichungstag der Anmeldung :
07.12.88 Patentblatt 88/49

(45) Bekanntmachung des Hinweises auf die
Patenterteilung :
06.03.91 Patentblatt 91/10

(84) Benannte Vertragsstaaten :
BE DE FR GB IT NL

(56) Entgegenhaltungen :
DE-A- 3 504 415
DE-A- 3 521 180
DE-B- 1 031 250
GB-A- 667 782
GB-A- 734 996
GB-A- 1 228 044
US-A- 4 185 935

(73) Patentinhaber : SMS SCHLOEMANN-SIEMAG
AKTIENGESELLSCHAFT
Eduard-Schloemann-Strasse 4
W-4000 Düsseldorf 1 (DE)

(72) Erfinder : Patzelt, Ulrich
Zum Hammerseifen 10
W-5910 Kreuztal (DE)

(74) Vertreter : Müller, Gerd et al
Patentanwälte
HEMMERICH-MÜLLER-GROSSE-POLLMEIER-MEY
Hammerstrasse 2
W-5900 Siegen 1 (DE)

## Beschreibung

Die Erfindung bezieht sich auf eine Vorrichtung zum axialen Verschieben von Walzen in Walzgerüsten, bei der die Walzen in anstellbar gleitend in den Walzenständern des Gerüstes geführten Walzenlagerträgern (Einbaustücken) lagern und durch gegen den Walzenständer abgestützte und mit dem Träger des Lagers der Walzen verbundene hydraulische Kolben-Zylinder-Aggregate verschiebbar sind, wobei die Lager der Walze innerhalb des Walzenlagerträgers axial verschiebbar sind und an diesem eine Gleitführung für einen, eine Kuppelvorrichtung für den Zapfen tragenden Schiebeschlitten angeordnet ist, an den die hydraulischen Kolben-Zylinder-Aggregate angelenkt sind und die aus, in radialen Führungen verschiebbaren, in eine Ringnut des Walzenzapfens einbringbaren Mitnehmern bestehende Kuppelvorrichtung von der Zapfenbüchse eines unverschiebbar in dem Schiebeschlitten angeordneten Radiaxlagers getragen wird.

Vorrichtungen dieser Art (DE-A 35 21 180) dienen dazu, bei Mehrwalzengerüsten mit Arbeitswalzen, Zwischenwalzen und Stützwalzen die Zwischenwalzen und/oder die Arbeitswalzen axial um vorgegebene Strecken zu verschieben. Bei der gattungsgemäßen Ausbildungsform ist die Kuppelvorrichtung an der dem Walzenzapfen abgewandten Stirnseite der Zapfenbüchse des Radiaxlagers angeordnet und besteht aus einem mit der Zapfenbüchse verbundenen Tragstück mit in eine Ringnut des Walzenzapfens einbringbaren Kuppelgliedern als Mitnehmern und einer axial über das Tragstück verschiebbaren, eine radiale Verschiebung bzw. Verschwenkung dieser Mitnehmer bewirkenden Schiebehülse. Die Mitnehmer sind als in radialen Führungsrinnen des Tragstücks verschiebbare Mitnehmerklötze mit mittigen Ausnehmungen ausgebildet, in die die einen Enden von im Tragstück gelagerten Doppelhebeln eingreifen, deren andere Enden an innenseitigen Führungsbahnen der Schiebehülse anliegen, wobei die Mitnehmerklötze von nach innen verlaufenden Klemmführungen der Schiebehülse, die sich keilförmig verjüngen, beaufschlagbar sind. Der Nachteil dieser Ausbildung besteht einmal darin, daß sie axial sehr lang baut, da sie außerhalb des Radiaxlagers an dessen Stirnseite angeordnet ist und dabei auch die Zapfenbüchse einer Biegebeanspruchung aussetzt. Auch ist die Vorrichtung wegen der zahlreichen, Zerspanungsarbeit erfordernden Schlitzführungen baulich aufwendig und kann wegen der Länge des Walzenzapfens sowie der außerhalb des Radiaxlagers rotierenden Massen zu störenden Schwingungen infolge nicht ganz zu beseitigender Unwuchten innerhalb der Konstruktion führen.

Der Erfindung liegt die Aufgabe zugrunde, diese Nachteile und Schwierigkeiten zu vermeiden. Diese Aufgabe wird dadurch gelöst, daß die Mitnehmer aus in radialen Führungsbohrungen innerhalb der Zapfenbüchse geführten in Richtung auf den Walzenzapfen feder- und entgegen dieser Richtung druckmittelbeaufschlagbaren Topfkolben bestehen. Diese Topfkolben können erfindungsgemäß zweckmäßig als an der dem Walzenzapfen abgewandten Stirnseite abgesetzte Ringbundkolben ausgebildet werden, deren Ringbund druckmittelbeaufschlagbar ist. Weiter kann, wie die Erfindung vorsieht, durch einen in einer drehachsparallelen Bohrung in der Zapfenbüchse verschiebbar geführten, tangential in die Bewegungsbahn eines Topfkolbens einbringbaren Sicherungsbolzen, der eine seitliche Durchgangsausnehmung für diesen Topfkolben aufweist, eine axiale Festlegung der Topfkolben in der Kupplungsstellung geschaffen werden.

Neben der Beseitigung der anfangs erwähnten Nachteile und Schwierigkeiten der gattungsgemäßen Kupplungsausbildung weist die erfindungsgemäße Ausbildung verhältnismäßig kleine und weitgehend unwuchtfreie rotierende Massen auf ; die für sie benötigten Bauteile sind im wesentlichen Drehteile, und der bauliche Platzbedarf liegt innerhalb der Abmessungen des ohnehin vorhandenen Radiaxlagers.

Die Erfindung wird anhand des in der Zeichnung dargestellten Ausführungsbeispiels erläutert. In der Zeichnung zeigen

Fig. 1 die Vorrichtung im Teilaxialschnitt,
Fig. 2 die Draufsicht auf einen Teil von Fig. 2, teilweise geschnitten
Fig. 3 einen Teil der Seitenansicht von Fig. 2,
Fig. 4 und 5 Einzelheiten aus den Fig. 2 und 3 und
Fig. 6 einen radialen Teilschnitt durch Fig. 1.

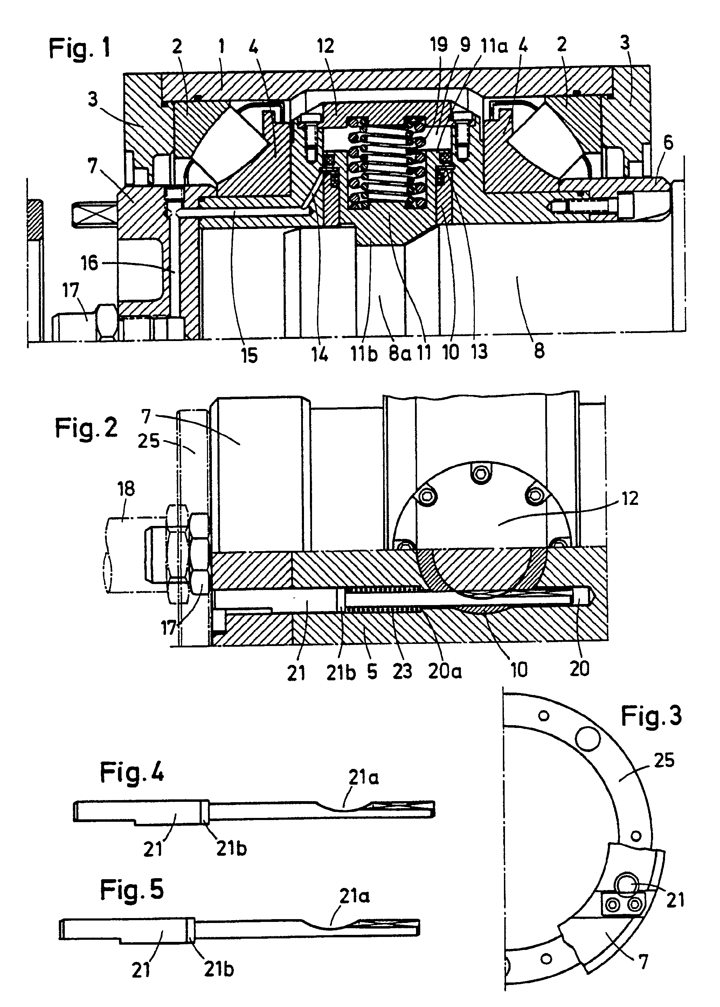

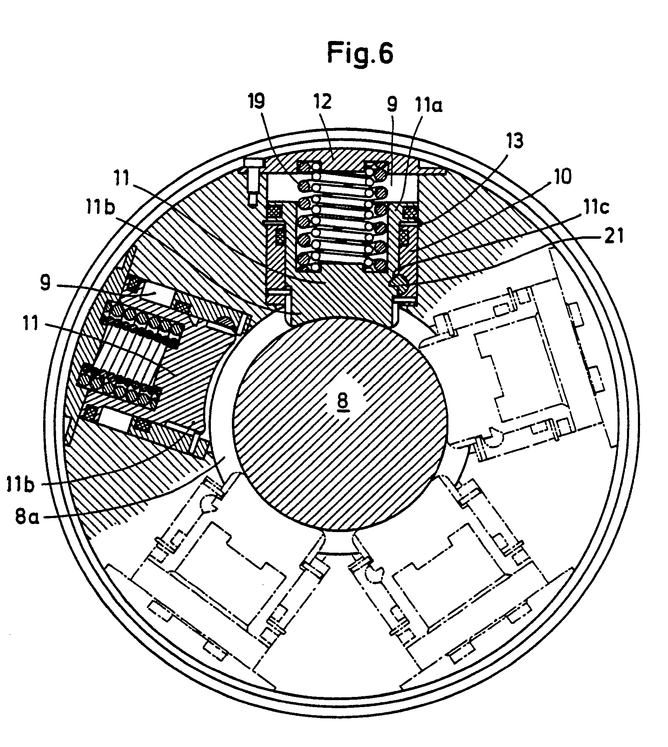

Die die Außenringe 2 des Radiaxlagers aufnehmende Hülse 1 mit den Flanschringen 3 ist auf nicht dargestellte Weise unverschiebbar in dem ebenfalls nicht wiedergegebenen Schiebeschlitten angeordnet, der von Kolben-Zylinder-Aggregaten in axialer Richtung verschiebbar ist. Die Innenringe 4 des Radiaxlagers werden von der auf den Walzenzapfen 8 aufgeschobenen Zapfenbüchse 5 getragen und sind auf dieser mit Hilfe eines aufgeschraubten Flanschringes 6 und der Deckelscheibe 7 festgelegt. In der Zapfenbüchse 5 sind radiale Führungsbohrungen (vgl. auch Fig. 6) 9 vorgesehen, in die Zylinderbuchsen 10 eingesetzt sind, die dem Topfkolben 11 als Führung dienen. Die Führungsbohrungen 9 sind an ihrer dem Walzenzapfen 8 abgewandten Seite durch einen Schraubdeckel 12 verschlossen. Zwischen der radial nach innen weisenden Ringfläche des Ringbundes 11a des Topfkolbens und der dieser zugewandten Ringstirn der Zylinderbuchse 10 wird ein Ringraum 13 gebildet, der über die Leitungsbohrungen 14, 15 und 16 mit einer Druckflüssigkeitskupplung 17 verbunden ist, auf die (Fig. 2) ein strichpunktiert angedeuteter Druckmittelstecker 18 aufsteckbar ist. Zwischen dem Schraubdeckel 12 und dem Topfkolben 11 sind Druckfedern 19 angeordnet (vgl. auch Fig. 6).

In der Zapfenbüchse 5 (Fig. 2 und 3) ist weiter eine abgesetzte Bohrung 20 vorgesehen, in der ein ebenfalls abgesetzter Sicherungsbolzen 21 längsverschiebbar geführt ist. Die Bohrung 20 schneidet tangential den Innenzylinderraum der Zylinderbuchse 10, und der Sicherungsbolzen 21 weist eine dem dabei ausgeschnittenen Kreisabschnitt entsprechende Ausnehmung 21a auf. Auf den Ringabsatz 21b des abgesetzten Sicherungsbolzens 21 wirkt eine Feder 23, die sich gegen den entsprechenden Ringabsatz 20a der abgesetzten Bohrung 20 abstützt.

In der in Fig. 1 und in Fig. 6 in vollen und in strichpunktierten Linien wiedergegebenen Arbeitslage greift der Topfkolben 11 unter dem Druck der Federn 19 mit dem Mitnahmeansatz 11b in die Ringnut 8a des Walzenzapfens 8 ein, da der Ringraum 13 zwischen dem Ringbund 11a des Topfkolbens 11 und der Zylinderhülse 10 nicht druckmittelbeaufschlagt ist. Der Topfkolben 11 wird dabei durch den Sicherungsbolzen 21, der sich in der in Fig. 1 und 5 wiedergegebenen axialen Stellung befindet und in eine entsprechende Ausnehmung 11c des Topfkolbens 11 eingreift, in dieser Lage verriegelt und gegen die Wirkung der beim Walzbetrieb auftretenden Fliehkräfte gesichert. Diese Stellung des Sicherungsbolzens 21 wird durch dessen aus der Deckelscheibe 7 axial herausstehendes Ende 21b außen sichtbar gemacht. Sollen die Topfkolben 11 außer Eingrifflage gebracht werden, dann wird auf den Schraubdeckel 7 (Fig. 2) ein (strichpunktiert dargestellter) Ring 25 mit dem Druckmittelstecker 18 aufgebracht und dadurch über die Leitungsbohrungen 16, 15, 14 der Ringraum 13 mit dem Druckmittel beaufschlagt und der Topfkolben 19 in die in Fig. 6 (oben links) wiedergegebene Stellung eingebracht, bei der sich der Mitnahmeansatz 11b des Topfkolbens 11 außerhalb der Ringnut 8a des Walzenzapfens 8 befindet. Der Sicherungsbolzen 21 wird dabei in die aus Fig. 2 hervorgehende Position gedrückt, die bewirkt, daß sich die Ausnehmung 21a innerhalb der Zylinderbuchse 10 befindet und damit die Bewegungsbahn des Topfkolbens 11 freigibt. Zapfenbüchse 5 und Walzenzapfen 8 können dadurch zum Zweck des Walzenwechsels voneinander abgeschoben und getrennt werden.

## Ansprüche

1. Vorrichtung zum axialen Verschieben von Walzen in Walzgerüsten, bei der die Walzen in anstellbar gleitend in den Walzenständern des Gerüstes geführten Walzenlagerträgern (Einbaustücken) lagern und durch gegen den Walzenständer abgestützte mit dem Träger des Lagers der Walzen verbundene hydraulische Kolben-Zylinder-Aggregate verschiebbar sind, wobei die Lager der Walze innerhalb des Walzenlagerträgers axial verschiebbar sind und an diesem eine Gleitführung für einen, eine Kuppelvorrichtung für den Zapfen (8) tragenden Schiebeschlitten angeordnet ist, an den die hydraulischen Kolben-Zylinder-Aggregate angelenkt sind und die aus in radialen Führungen verschiebbaren, in eine Ringnut (8a) des Walzenzapfens (8) einbringbaren Mitnehmern (11) bestehende Kuppelvorrichtung von der Zapfenbüchse (5) eines unverschiebbar in dem Schiebeschlitten angeordneten Radiaxlagers (2, 4) getragen wird, **dadurch gekennzeichnet,** daß die Mitnehmer aus in radialen Führungsbahnen (9) innerhalb der Zapfenbüchse (5) geführten, in Richtung auf den Walzenzapfen (8a) feder- und entgegen dieser Richtung druckmittelbeaufschlagbaren Topfkolben (11) bestehen.

2. Vorrichtung nach Anspruch 1, **dadurch gekennzeichnet,** daß die Topfkolben (11) als an der dem Walzenzapfen (8) abgewandten Stirnseite abgesetzter Ringbundkolben ausgebildet sind, deren Ringbund (11a) druckmittelbeaufschlagbar ist.

3. Vorrichtung nach den Ansprüchen 1 und/oder 2, **gekennzeichnet durch** einen in einer drehachsparallelen Bohrung (20) in der Zapfenbüchse (5) verschiebbar geführten, tangential in die Bewegungsbahn eines Topfkolbens (11) einbringbaren, eine seitliche Durchgangsausnehmung (21a) für diesen Topfkolben (11) aufweisenden Sicherungsbolzen (21).

## Claims

1. Device for the axial displacement of rolls in roll stands, in which the rolls are borne in roll bearing carriers (chocks), which are guided in the roll standards of the stand to be sliding and capable of being screwed down, and displaceable by hydraulic piston-cylinder units, which are supported against the roll standard and connected with the carrier of the bearing of the rolls, wherein the bearings of the rolls are axially displaceable within the roll bearing carrier and a slide guide is arranged at this for a slide carriage, which carries a coupling device for the spigot (8) and at which the hydraulic piston-cylinder units are articulated, and the coupling device, which consists of entraining members (11), which are displaceable in radial guides and introduceable into an annular groove (8a) of the roll spigot (8), is carried by the spigot bush (5) of a radial ball bearing arranged undisplaceably in the slide carriage, characterised thereby, that the entraining members consist of pot pistons (11), which are guided within the spigot bush (5) in radial guide tracks (9) and are loadable by a spring in the direction towards the roll spigot (8a) and by pressure medium against this direction.

2. Device according to claim 1, characterised thereby, that the pot pistons (11) are constructed as annular collar pistons, which are stepped at the end face remote from the roll spigot (8) and the annular collar (11a) of which is loadable by pressure medium.

3. Device according to the claims 1 and/or 2, characterised by a securing pin (21), which is guided to be displaceable in a bore (20), which is in the spigot bush (5) and parallel to the axis of rotation, and introduceable tangentially into the path of movement of a pot piston (11) and which displays a lateral passage recesss (21a) for this pot piston (11).

## Revendications

1. Dispositif pour le déplacement axial de cylindres dans des cages de laminage, dans lequel les cylindres sont logés dans des supports de palier de cylindre (empoises), guidés de manière coulissable et réglable dans des montants de cage de laminage et sont déplaçables à l'aide de dispositifs hydrauliques à piston et cylindre prenant appui contre les montants et reliés au support du palier des cylindres, les paliers du cylindre étant axialement déplaçables à l'intérieur du support de palier de cylindre et celui-ci comportant un guide à glissement pour un chariot coulissable portant un dispositif d'accouplement du tourillon (8), les dispositifs hydrauliques à piston et cylindre étant articulés audit chariot coulissable, et le dispositif d'accouplement constitué par des moyens d'entraînement (11) engageables dans une rainure annulaire (8a) du tourillon (8) et déplaçables dans des guides radiaux étant porté par la douille de tourillon (5) d'un palier (2, 4) agencé de façon immobile dans le chariot coulissable, caractérisé en ce que les moyens d'entraînement consistent en des pistons en forme de creuset (11) guidés par des guides radiaux (9) agencés à l'intérieur de la douille de tourillon (5), pistons sous l'effet de ressort en direction du tourillon de cylindre (8a) et sous l'effet d'un agent de pression en direction inverse.

2. Dispositif selon la revendication 1 caractérisé en ce que les pistons en forme de creuset (11) consistent en des pistons dont la face frontale opposée au tourillon de cylindre (8) présente un épaulement annulaire (11a) sur lequel agit l'agent sous pression.

3. Dispositif selon les revendications 1 et/ou 2 caractérisé par une broche de sécurisation (21) qui est menée de façon déplaçable dans un alésage (20) pratiqué dans la douille de tourillon (5) parallèlement à l'axe de rotation, qui est tangentiellement engageable dans la trajectoire d'un piston en forme de creuset (11) et qui est munie d'un évidement de passage (21a) pour ce piston en forme de creuset (11).

**Fig. 1**

2  1  4  12  19  9  11a  4  2  3

3

7

6

16

17

15  14  11b  8a  11  10  13  8

**Fig. 2**

7
25

18

17

21  21b  5  23  20a  10  20

12

**Fig. 3**

25

21

7

**Fig. 4**

21a

21  21b

**Fig. 5**

21a

21  21b

# Fig.6